# FASCICULE DE BREVET EUROPEEN

(11) **EP 1 493 047 B1**
(45) Date de publication et mention de la délivrance du brevet: **01.01.2014**
(21) Numéro de dépôt: 03727608.6
(22) Date de dépôt: 21.03.2003
(51) Int. Cl.: G02B 5/18

(54) **COMPOSANT OPTIQUE DE SECURITE**
OPTISCHES SICHERHEITSELEMENT
SECURITY OPTICAL COMPONENT

(30) Priorité: 08.04.2002 FR 0204359; 03.02.2003 FR 0301222
(43) Date de publication de la demande: 05.01.2005
(73) Titulaire: Hologram Industries (S.A.), 77600 Bussy St Georges (FR)
(72) Inventeur: SOUPARIS, Hugues, F-94130 Nogent Sur Marne (FR)
(74) Mandataire: Novagraaf Technologies
(86) Numéro de dépôt international: PCT/FR2003/000911
(87) Numéro de publication internationale: WO 2003/085425

(56) Documents cités:
- EP-A- 0 743 192
- EP-A- 0 869 408
- WO-A-01/07268
- FR-A- 2 509 873
- GB-A- 2 126 949
- US-A- 4 856 857
- US-A- 5 882 463

## Description

La présente invention concerne un composant actif de sécurité, comprenant une couche intérieure de vernis estampé métallisé, formant un réseau diffringent. Le principe général d'un tel composant est décrit dans le brevet français FR2509873.

Ce brevet décrit un filtre coloré soustractif à diffraction comprenant un milieu optique à indice de réfraction variable d'épaisseur (t) et de périodicité (d) minimum par rapport à la longueur d'onde de la lumière incidente. Le filtre obéit à certaines contraintes en ce qui concerne:
1) les indices de réfraction relatifs de sa structure interne et de son environnement,
2) les valeurs relatives de la longueur d'onde de la lumière incidente par rapport a la périodicité, et
3) les indices de réfraction relatifs du milieu optique et de son environnement.

Ce filtre produit à la fois des spectres de réflexion à soustraction de couleurs et sensibles aux angles et des spectres de transmission à soustraction de couleurs conformément à ses paramètres physiques.

Un tel composant produit un effet coloré variable, en fonction des directions d'éclairage et d'observation. Le composant présente par exemple un aspect verdâtre selon certaines orientations et rougeâtre selon d'autre orientation, pour un type de réseau donné. Ces variations de couleurs sont toutefois subtiles et parfois difficiles à observer à l'oeil nu (indépendamment de la lisibilité machine).

Or, l'utilisation d'un tel composant pour le marquage de sécurité nécessite que toute personne censée vérifier l'authenticité du produit ou du document puisse constater de façon nette et sans ambiguïté que les effets prévus soient produits, y compris lorsque les conditions d'éclairage ne sont pas optimales.

On connaît également des composants produisant des effets holographiques, tels que les brevets américains US4856857, US5882463, européen EP743192, ou WO01/07268.

On connaît également le brevet GB2126949 décrivant un composant d'authentification présentant composant optique de sécurité dont la couche d'indice haut est revêtue tout d'abord par une couche de bas indice optique puis par une couche de contraste. Ce composant produit des effets de changement de couleur en fonction de l'orientation, lors d'une rotation par rapport à un axe perpendiculaire à sa surface. Ces effets sont toutefois parfois difficiles à discerner.

Le but de la présente invention est d'améliorer le comportement optique des composants de l'état de la technique, en améliorant la lisibilité des changements de coloration. A cet effet, l'invention concerne, selon son acception la plus générale, un composant optique de sécurité suivant la première revendication; dont la couche d'indice haut est revêtue tout d'abord par une couche de bas indice optique puis par une couche de contraste colorée.

Cette couche colorée a un effet inattendu d'augmenter de façon significative la différence de coloration lors des modifications d'orientation.

De préférence, certaines des zones présentent une forme reconnaissable.

Ces formes peuvent être des caractères alphanumériques, des microlettrages, de figures géométriques, des dessins ou des photographies. De préférence, la couche colorée est obtenue avec des pigments noirs.

Selon un mode de réalisation préféré, le composant présente une couche diffusante disposée entre la surface estampée et la surface d'observation. Cette couche a pour but de limiter la réflexion spéculaire.

Selon un mode de mise en oeuvre particulier, le composant présente la forme d'un fil d'une largeur comprise entre 1,2 et 4 millimètres.

La présente invention sera mieux comprise à la lecture de la description d'un exemple non limitatif de réalisation, faisant référence aux dessins annexés où :
- la figure 1 représente une vue en coupe d'un composant optique exemplaire
- la figure 2 représente une vue en coupe d'un autre exemple
- la figure 3 représente une vue en coupe d'une variante de réalisation selon l'invention, avec une couche additionnelle complètement métallisée
- la figure 4 représente une vue en coupe d'une autre variante de réalisation, avec une couche additionnelle partiellement métallisée

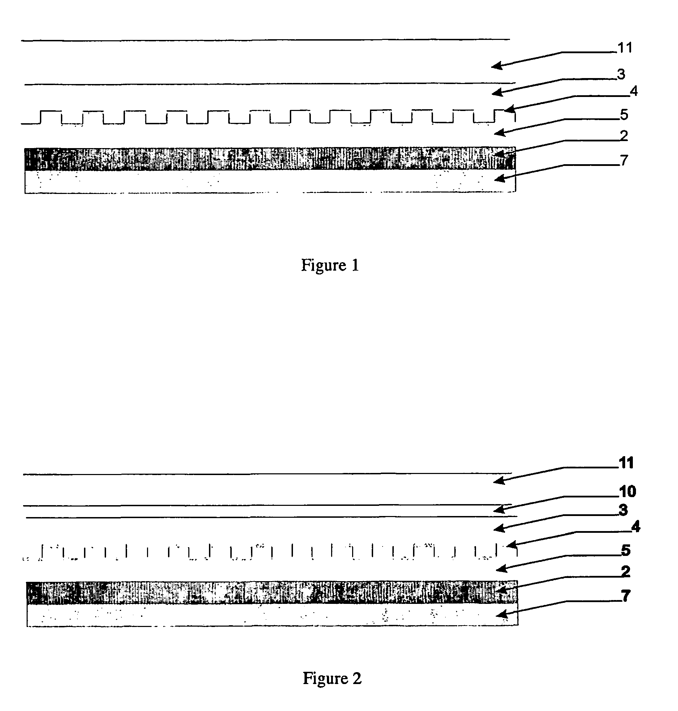

La figure 1 représente une vue selon un plan de coupe. Le composant est formé par un film de polyester revêtu d'une couche de vernis d'estampage (3) embossé par estampage, de façon connue pour la réalisation d'hologrammes ou de structures diffringentes destinée à l'authentification de documents. La surface estampée est revêtue par dépôt sous vide d'une couche d'un matériau diélectrique transparent à haut indice optique (4), par exemple du sulfure de zinc (ZnS), puis par enduction d'une couche d'indice optique bas (proche de l'indice du vernis d'estampage). Le composant comprend alors une couche colorée (2) disposée en arrière de la couche de bas indice. Cette couche est une couche de vernis comportant des pigments noirs.

L'ensemble ainsi préparé est ensuite revêtu d'un film adhésif (7) déposé par exemple par enduction, complexage ou laminage.

Le composant ainsi réalisé peut être apposé sur un document ou un produit à protéger, par collage par exemple.

Il peut également être scellé entre un objet ou un document, et un film de scellage protégeant l'objet ou le document, et permettant de détecter toute tentative de retrait de ce film.

La figure 2 représente un composant exemplaire, pour la réalisation d'un film de marquage à chaud ou d'un film transfert. Le vernis d'estampage (3) est couché sur une couche de détachement (10) elle même supportée par un film transparent (11), par exemple un film de polyester. La couche de contraste est positionnée derrière la couche d'indice optique bas.

Dans une application particulière de l'invention, le composant optique est réalisé sous forme d'un fil d'une largeur de moins de 5 mm. Un tel composant est destiné à la réalisation de documents de sécurité, ayant des faces opposées destinées à une impression assurant l'identification d'un document formé à partir du papier. Le composant selon l'invention est placé entre les deux surfaces du papier à titre de caractéristique de sécurité. Il est disposé au moins partiellement entre les surfaces du papier. Les parties visibles sont comprises entre 10 et 50% de la surface du composant optique. Les parties visibles forment un motif, un dessin ou des signes répétitifs.

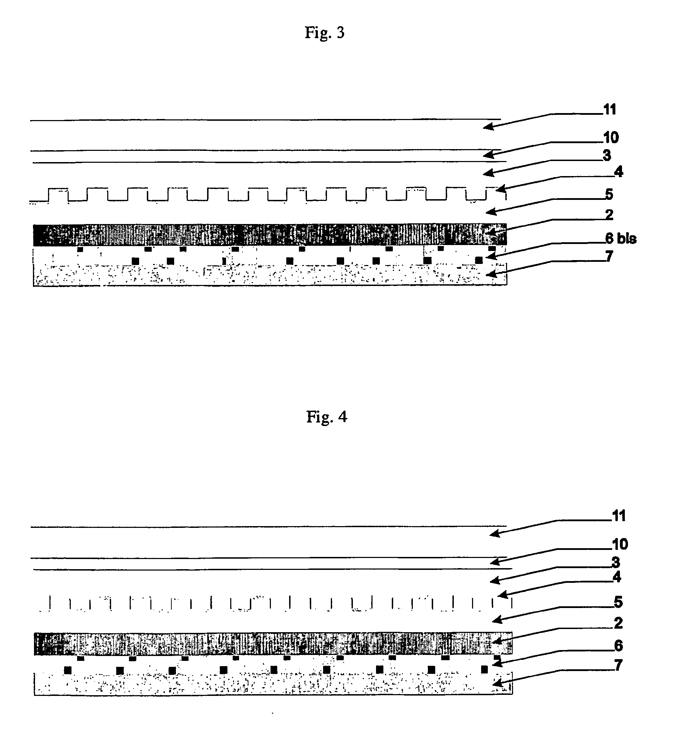

Les figures 3 et 4 représentent deux variantes de réalisation, comportant une couche intermédiaire respectivement continue (6) ou discontinue (6 bis), disposée sur la couche adhésive(7).

Cette couche (6, 6bis) est formée dans un premier exemple par une couche métallique dont la présence peut-être contrôlée en machine, mise en oeuvre notamment pour une application fiduciaire.

Cette couche (6, 6bis) est formée dans un deuxième exemple par une couche réflective permettant lorsque le composant est inséré dans un milieu de faible épaisseur (non continûment opaque) de réduire considérablement la visibilité dudit composant lorsque l'on observe le dos du composant en renvoyant la lumière de manière diffuse au lieu de l'absorber, C'est par exemple le cas du fil du billet de banque qui doit être le moins perceptible possible lorsque l'on observe le verso du billet (le composant optique étant actif au recto), (application principale : fiduciaire),

Cette couche (6, 6bis) est formée dans un troisième exemple par une couche partiellement métallisée de manière à ajouter une sécurité complémentaire, Cette métallisation partielle dessine en repérage ou non avec l'impression de la couche opaque ou avec le motif du composant optique, des caractères significatifs tels que des caractères alphanumériques, des micro-lettrages, un logo, des figures géométriques, ou tout autre dessin ou photo, (application principale : identité ou protection des marques).

La sécurité de ce composant optique particulier repose sur l'observation à l'ordre zéro du réseau. De manière générale, à l'ordre zéro « réflexion directe » un réseau agit comme un miroir. Cependant le réseau particulier utilisé dans cette invention agit à l'ordre zéro comme un filtre soustractif du fait de l'alternance des différents indices. Par contre lorsque l'on ajoute une couche métallique (6, 6bis) derrière la couche de bas indice transparente (5), l'effet du filtre soustractif disparaît et l'on a à nouveau un effet de miroir.

Cette caractéristique permet de dessiner très simplement des motifs sur une surface uniforme de réseau en combinant l'impression localisée de la couche de contraste (2) aux endroits où l'effet optique doit être visible et la métallisation (6, 6bis) visible dans les zones non imprimées de la couche (5).

Cette couche (6, 6bis) est formée dans un quatrième exemple par une couche réagissant au laser de manière à permettre la personnalisation individuelle du composant optique, Cette couche pouvant à nouveau être une couche métallique, Dans ce cas précis il est conseillé de rajouter une couche de pigment qui sera mise à nue lors de la personnalisation, ou bien encore de teinter la couche adhésive, Cette couche est particulièrement avantageuse dans les applications touchant à l'identité ,

Cette couche (6, 6bis) est formée dans un cinquième exemple qui ne correspond pas à l'invention, par une couche colorée (d'une couleur différente de la couche de contraste), Cette couleur visible au travers du pattern d'impression de la couche de contraste pouvant présenter une des caractéristiques suivantes : couleur thermo-chrome, transparente dans le visible mais « révélable » aux UV, ou une couche luminescente, On obtiendra un effet similaire en incorporant cette « teinte » à la couche adhésive,

L'invention peut être réalisée sous trois différents types de produits : fil, piste, patch, Ainsi il peut indifféremment être utilisé pour sécuriser :
- un billet de banque (domaine fiduciaire) où la sécurité est intrinsèque au papier,
- un document d'identité (passeport, carte d'identité) où la sécurité est rapportée sur le document,
- un produit (protection des marques) où la sécurité est rapportée soit sur le produit lui-même, soit sur l'emballage.

Cette amélioration peut s'appliquer aussi bien aux films transferts (à chaud ou à froid) qu'aux films de type étiquette, ou bien fil.

## Revendications

1. Composant optique de sécurité pour l'authentification d'un document ou d'un produit, comprenant une couche adhésive (7) et présentant un film plastique transparent (3) embossé pour présenter au moins un réseau diffractant, la surface embossée étant au moins partiellement revêtue par une couche de matériau diélectrique (4) de haut indice optique, produisant un effet coloré d'une première couleur pour une première orientation du composant et une deuxième couleur différente pour l'orientation perpendiculaire à la première orientation, dans lequel la couche (4) est revêtue du côté opposé à la direction d'observation par une couche de bas indice optique (5) puis par une couche de contraste colorée (2) présentant des zones transparentes et des zones colorées,
**Caractérisé en ce que**
Le réseau diffractant agit à l'ordre zéro comme un filtre soustractif, et **en ce que**
le composant comprend en outre une couche intermédiaire (6, 6bis) métallique ou partiellement métallisée, disposée derrière la couche de bas indice optique (5), de sorte à faire disparaître l'effet soustractif dudit filtre et apparaître un effet de miroir.

2. Composant optique selon la revendication 1, **caractérisé en ce que** la couche de contraste et la couche de bas indice optique sont confondues.

3. Composant optique selon la revendication 1 ou 2, **caractérisé en ce que** certaines des zones présentent une forme reconnaissable.

4. Composant optique selon l'une quelconque des revendications précédentes, **caractérisé en ce que** la couche colorée est réalisée à l'aide de pigments noirs.

5. Composant optique selon l'une quelconque des revendications précédentes, **caractérisé en ce qu'**il présente une couche diffusante disposée entre la surface estampée et la surface d'observation.

6. Composant optique selon l'une quelconque des revendications précédentes, **caractérisé en ce qu'**il présente la forme d'un fil d'une largeur comprise entre 1,2 et 4 millimètres.

7. Composant optique selon l'une quelconque des revendications 1 à 6, **caractérisé en ce que** la couche intermédiaire (6) est continue.

8. Composant optique selon l'une quelconque des revendications 1 à 6, **caractérisé en ce que** la couche intermédiaire (6 bis) est discontinue.

9. Composant optique selon l'une quelconque des revendications précédentes, dans lequel la couche intermédiaire (6, 6bis) est partiellement métallisée et dessine en repérage ou non avec l'impression de la couche opaque ou avec le motif du composant optique, des caractères significatifs.

## Patentansprüche

1. Optische Sicherheitskomponente für die Authentifizierung eines Dokuments oder eines Produkts, die eine Klebeschicht (7) umfasst und einen lichtdurchlässigen Kunststofffilm (3) aufweist, der geprägt ist, damit er wenigstens ein Beugungsgitter aufweist, wobei die geprägte Oberfläche wenigstens teilweise mit einer Schicht (4) aus dielektrischem Material mit hohem optischen Index beschichtet ist und einen Farbeffekt einer ersten Farbe für eine erste Orientierung der Komponente und einer zweiten, anderen Farbe für die zu der ersten Orientierung senkrechte Orientierung erzeugt, wobei die Schicht (4) auf der der Beobachtungsrichtung gegenüberliegenden Seite durch eine Schicht (5) mit niedrigem optischen Index und dann durch eine Farbkontrastschicht (2), die lichtdurchlässige Zonen und gefärbte Zonen aufweist, aufgebracht ist,
**dadurch gekennzeichnet, dass**
das Beugungsgitter auf die Ordnung null wie ein subtraktives Filter wirkt und dass
die Komponente außerdem eine metallische oder teilweise metallisierte Zwischenschicht (6, 6a) aufweist, die hinter der Schicht (5) mit niedrigem optischen Index angeordnet ist, derart, dass sie unter der subtraktiven Wirkung des Filters verschwindet und eine Spiegelwirkung erscheinen lässt.

2. Optische Komponente nach Anspruch 1, **dadurch gekennzeichnet, dass** die Kontrastschicht und die Schicht mit niedrigem optischen Index zusammenfallen.

3. Optische Komponente nach Anspruch 1 oder 2, **dadurch gekennzeichnet, dass** Bestimmte der Zonen eine wiedererkennbare Form aufweisen.

4. Optische Komponente nach einem der vorhergehenden Ansprüche, **dadurch gekennzeichnet, dass** die gefärbte Schicht mit Hilfe schwarzer Pigmente verwirklicht ist.

5. Optische Komponente nach einem der vorhergehenden Ansprüche, **dadurch gekennzeichnet, dass** sie eine Diffusionsschicht aufweist, die zwischen der geprägten Oberfläche und der Beobachtungsfläche angeordnet ist.

6. Optische Komponente nach einem der vorhergehenden Ansprüche, **dadurch gekennzeichnet, dass** sie die Form eines Fadens mit einer Breite im Bereich von 1, 2 bis 4 Millimeter aufweist.

7. Optische Komponente nach einem der Ansprüche 1 bis 6, **dadurch gekennzeichnet, dass** die Zwischenschicht (6) kontinuierlich ist.

8. Optische Komponente nach einem der Ansprüche 1 bis 6, **dadurch gekennzeichnet, dass** die Zwischenschicht (6a) diskontinuierlich ist.

9. Optische Komponente nach einem der vorhergehenden Ansprüche, wobei die Zwischenschicht (6, 6a) teilweise metallisiert ist und mit oder ohne Registerhaltung mit dem Druck der lichtundurchlässigen Schicht oder mit dem Muster der optischen Komponente signifikante Zeichen bildet.

## Claims

1. Optical security component for authenticating a document or a product, comprising an adhesive layer (7) and containing a transparent plastic film (3) embossed in order to contain at least one diffraction grating, the embossed surface being at least partially coated with a layer (4) of a dielectric with a high optical index, producing a colour effect of a first colour for a first orientation of the component and of a different second colour for the orientation perpendicular to the first orientation, in which the layer (4) is coated, on the side opposite the direction of observation, with a low-optical-index layer (5), and then with a coloured contrast layer (2) containing transparent zones and coloured zones,
**characterized in that**
the diffraction grating acts, at zero order, as a subtractive filter, and **in that**
the component furthermore comprises an intermediate metal or partially metallized layer (6, 6 bis) placed behind the low-optical-index layer (5) in order to make the subtractive effect of said filter disappear and a mirror effect appear.

2. Optical component according to Claim 1, **characterized in that** the contrast layer and the low-optical-index layer are merged.

3. Optical component according to either of Claims 1 and 2, **characterized in that** certain of the zones have a recognizable shape.

4. Optical component according to any one of the preceding claims, **characterized in that** the coloured layer is produced using black pigments.

5. Optical component according to any one of the preceding claims, **characterized in that** it contains a scattering layer placed between the embossed surface and the observation surface.

6. Optical component according to any one of the preceding claims, **characterized in that** it takes the form of a thread of width comprised between 1.2 and 4 millimetres.

7. Optical component according to any one of Claims 1 to 6, **characterized in that** the intermediate layer (6) is continuous.

8. Optical component according to any one of Claims 1 to 6, **characterized in that** the intermediate layer (6 bis) is discontinuous.

9. Optical component according to any one of the preceding claims, in which the intermediate layer (6, 6 bis) is partially metallized and marks out, in or out of register with the print of the opaque layer or with the pattern of the optical component, meaningful characters.
